(19) Europäisches Patentamt
European Patent Office
Office européen des brevets

(11) **EP 4 177 074 B1**

(12) **EUROPEAN PATENT SPECIFICATION**

(45) Date of publication and mention of the grant of the patent:
**30.04.2025 Bulletin 2025/18**

(21) Application number: **22202017.4**

(22) Date of filing: **17.10.2022**

(51) International Patent Classification (IPC):
***B60C 1/00*** *(2006.01)* ***C08L 7/00*** *(2006.01)*
***C08L 9/00*** *(2006.01)* ***C08L 9/06*** *(2006.01)*
***B60C 11/03*** *(2006.01)*

(52) Cooperative Patent Classification (CPC):
(C-Sets available)
**C08L 9/06; B60C 1/0016; B60C 11/033;**
Y02T 10/86 (Cont.)

(54) **TIRE**

REIFEN

PNEUMATIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **09.11.2021 JP 2021182757**

(43) Date of publication of application:
**10.05.2023 Bulletin 2023/19**

(73) Proprietor: **Sumitomo Rubber Industries, Ltd.**
**Kobe-shi, Hyogo 651-0072 (JP)**

(72) Inventor: **MATSUI, Tomoya**
**Kobe-shi, Hyogo, 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 3 533 828**
**EP-A1- 3 722 361**
**EP-A1- 3 904 117**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 9/06, C08L 7/00, C08L 91/00, C08L 9/00, C08L 25/16, C08L 71/02, C08L 91/06, C08K 3/04, C08K 3/36, C08K 5/548, C08K 3/22, C08K 5/18, C08K 5/09, C08K 3/06, C08K 5/31, C08K 5/47; C08L 9/06, C08L 7/00, C08L 91/00, C08L 9/00, C08L 45/02, C08L 71/02, C08L 91/06, C08K 3/04, C08K 3/36, C08K 5/548, C08K 3/22, C08K 5/18, C08K 5/09, C08K 3/06, C08K 5/31, C08K 5/47; C08L 9/06, C08L 7/00, C08L 91/00, C08L 9/00, C08L 47/00, C08L 71/02, C08L 91/06, C08K 3/04, C08K 3/36, C08K 5/548, C08K 3/22, C08K 5/18, C08K 5/09, C08K 3/06, C08K 5/31, C08K 5/47; C08L 9/06, C08L 7/00, C08L 91/00, C08L 9/00, C08L 65/00, C08L 71/02, C08L 91/06, C08K 3/04, C08K 3/36, C08K 5/548, C08K 3/22, C08K 5/18, C08K 5/09, C08K 3/06, C08K 5/31, C08K 5/47**

## Description

TECHNICAL FIELD

The present invention relates to a tire.

BACKGROUND ART

In recent years, automobile tires with improved grip performance, in particular improved wet grip performance, have been desired for safety and other reasons.

SUMMARY OF INVENTION

TECHNICAL PROBLEM

The present invention aims to solve the problem and to provide a tire having excellent wet grip performance.

SOLUTION TO PROBLEM

The present invention relates to a tire, including a tread,
the tread containing:

at least one rubber component;
at least one silica; and
at least one compound represented by the following formula (I):

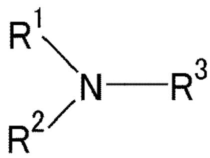

(I)

wherein $R^1$ represents a hydrocarbon group; and $R^2$ and $R^3$ are the same or different and each represent a hydrogen atom, a hydrocarbon group, or a $-(AO)_n-H$ group where n represents an integer of 1 or larger, n for $R^2$ and n for $R^3$ may be the same or different, and each AO is the same or different and represents an oxyalkylene group having two or more carbon atoms, and at least one of $R^2$ or $R^3$ is a $-(AO)_n-H$ group,
the tread having a land ratio of 60% or higher.

ADVANTAGEOUS EFFECTS OF INVENTION

The tire of the present invention includes a tread that contains a rubber component, silica, and a compound of formula (I) and has a land ratio of 60% or higher. Such a tire provides improved wet grip performance.

DESCRIPTION OF EMBODIMENTS

The present invention relates to a tire including a tread that contains a rubber component, silica, and a compound of formula (I) and has a land ratio of 60% or higher.

The reason why the above tire provides the advantageous effect described above is believed to be as follows.

The compound of formula (I) has a structure in which a hydrocarbon (alkyl) group is connected with a hydrophilic amine, which may allow the hydrocarbon group of the compound of formula (I) to be well compatible and physically entangled with rubber components, so that it can be inhibited from bleeding out of the tread.

The compound of formula (I) may also form a hydrogen bond with the hydrophilic group of silica to hydrophobize the silica, so that the silica and the compound can be uniformly dispersed in the rubber composition.

Moreover, the hydrophilic portions possessed by the silica and the compound of formula (I) may produce adhesion when the tread contacts the wet road surface, thereby improving grip.

In addition, since the tire of the present invention has a structure with a high land ratio and therefore a larger ground contact area, the hydrophilic portions of the uniformly dispersed silica and compound of formula (I) may well contact the wet road surface so that the contact area between the hydrophilic portions and the wet road surface is

increased, resulting in improved wet grip performance.

Due to this mechanism of action, it is believed that the combination of the compound of formula (I) and the specified tire structure provides synergistically improved wet grip performance to the tire of the present invention.

Thus, the tire solves the problem (purpose) of improving wet grip performance by formulating a tread that contains a rubber component, silica, and a compound of formula (I) and has a land ratio of 60% or higher. In other words, the parameter "a land ratio of 60% or higher" does not define the problem (purpose) and the problem herein is to improve wet grip performance. In order to solve this problem, the tire has been formulated to satisfy the parameter.

In the tire, the land ratio of the tread is 60% or higher, preferably 63% or higher, more preferably 65% or higher, still more preferably 68% or higher, further preferably 70% or higher, particularly preferably 71% or higher. The upper limit of the land ratio is preferably 90% or lower, more preferably 85% or lower, still more preferably 82% or lower, particularly preferably 80% or lower. When the land ratio is within the range indicated above, the advantageous effect tends to be better achieved.

Herein, when the tire is a pneumatic tire, the land ratio is calculated from the contact patch of the tire under conditions including a normal rim, a normal internal pressure, and a normal load. When the tire is a non-pneumatic tire, the land ratio can be similarly determined without the need of a normal internal pressure.

The term "normal rim" refers to a rim specified for each tire by the standard in a standard system including standards according to which tires are provided, and may be, for example, the standard rim in JATMA, "design rim" in TRA, or "measuring rim" in ETRTO.

The term "normal internal pressure" refers to an air pressure specified for each tire by the standard and may be the maximum air pressure in JATMA, the maximum value shown in Table "TIRE LOAD LIMITS AT VARIOUS COLD INFLATION PRESSURES" in TRA, or "inflation pressure" in ETRTO.

The term "normal load" refers to a maximum load specified for each tire by the standard and may be the maximum load capacity in JATMA, the maximum value shown in Table "TIRE LOAD LIMITS AT VARIOUS COLD INFLATION PRESSURES" in TRA, or the maximum load of "load capacity" in ETRTO.

The contact patch may be determined by mounting the tire on a normal rim, applying a normal internal pressure to the tire, and allowing the tire to stand at 25°C for 24 hours, followed by applying black ink to the tread surface of the tire and pressing the tread surface against a cardboard at a normal load (camber angle: 0°) for transfer to the cardboard.

The transfer may be performed on the tire in five positions, each rotated by 72° in the circumferential direction. Namely, five contact patches may be determined.

The average of the maximum lengths in the tire axial direction of the five contact patches is denoted as L, and the average of the lengths in the direction perpendicular to the axial direction thereof is denoted as W.

The land ratio is calculated using the equation:

[Average of areas of five contact patches transferred to cardboard (parts with black ink)]/(L $\times$ W) $\times$ 100 (%).

The negative ratio (%) is calculated using the equation: [1-{Average of areas of five contact patches transferred to cardboard (parts with black ink)}/(L $\times$ W)] $\times$ 100 (%).

Here, the average length or area is the simple average of the five values. The (L $\times$ W) in the equations represents the area of a virtual surface obtained by connecting the edges of the blank parts corresponding to the main grooves and lateral grooves in the determined contact patch.

The tread in the tire of the present invention includes a tread rubber composition containing a rubber component, silica, and a compound of formula (I).

The rubber composition contains one or more rubber components.

The rubber components in the rubber composition contribute to crosslinking and generally correspond to polymers having a weight average molecular weight (Mw) of 10,000 or more.

The weight average molecular weight of the rubber components is preferably 50,000 or more, more preferably 150,000 or more, still more preferably 200,000 or more, but is preferably 2,000,000 or less, more preferably 1,500,000 or less, still more preferably 1,000,000 or less. When the weight average molecular weight is within the range indicated above, the advantageous effect tends to be better achieved.

Herein, the weight average molecular weight (Mw) can be determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards.

Any rubber component may be used including those known in the tire field. Examples include diene rubbers such as isoprene-based rubbers, polybutadiene rubbers (BR), styrene-butadiene rubbers (SBR), acrylonitrile-butadiene rubbers (NBR), chloroprene rubbers (CR), butyl rubbers (IIR), and styrene-isoprene-butadiene copolymer rubbers (SIBR). Each of these rubbers may be used alone, or two or more of these may be used in combination. Among these, isoprene-based rubbers, BR, and SBR are preferred in order to better achieve the advantageous effect. More preferably,

the rubber components include BR, still more preferably a combination of BR and SBR.

Examples of isoprene-based rubbers include natural rubbers (NR), polyisoprene rubbers (IR), refined NR, modified NR, and modified IR. Examples of NR include those commonly used in the tire industry such as SIR20, RSS#3, and TSR20. Any IR may be used including, for example, those commonly used in the tire industry such as IR2200. Examples of refined NR include deproteinized natural rubbers (DPNR) and highly purified natural rubbers (UPNR). Examples of modified NR include epoxidized natural rubbers (ENR), hydrogenated natural rubbers (HNR), and grafted natural rubbers. Examples of modified IR include epoxidized polyisoprene rubbers, hydrogenated polyisoprene rubbers, and grafted polyisoprene rubbers. These may be used alone or in combinations of two or more. NR is preferred among these.

When the rubber composition contains isoprene-based rubbers, the amount of isoprene-based rubbers based on 100% by mass of the rubber component content is preferably 5% by mass or more, more preferably 20% by mass or more, still more preferably 30% by mass or more, particularly preferably 35% by mass or more, but is preferably 60% by mass or less, more preferably 50% by mass or less, still more preferably 45% by mass or less. When the amount is within the range indicated above, the advantageous effect tends to be better achieved.

Any BR may be used, and examples include those commonly used in the tire industry, including: high cis BR such as BR1220 available from Zeon Corporation, BR150B available from Ube Industries, Ltd., and BR1280 available from LG Chem; BR containing 1,2-syndiotactic polybutadiene crystals (SPB) such as VCR412 and VCR617 both available from Ube Industries, Ltd.; and polybutadiene rubbers synthesized using rare earth catalysts (rare earth-catalyzed BR). Each of these may be used alone, or two or more of these may be used in combination.

The cis content of the BR is preferably 80% by mass or higher, more preferably 85% by mass or higher, still more preferably 90% by mass or higher, but is preferably 99% by mass or lower, more preferably 98% by mass or lower, still more preferably 97% by mass or lower. When the cis content is within the range indicated above, the advantageous effect tends to be better achieved.

Here, the cis content of the BR can be measured by infrared absorption spectrometry.

When the rubber composition contains BR, the amount of BR based on 100% by mass of the rubber component content is preferably 5% by mass or more, more preferably 10% by mass or more, still more preferably 15% by mass or more, particularly preferably 20% by mass or more, but is preferably 60% by mass or less, more preferably 50% by mass or less, still more preferably 40% by mass or less, particularly preferably 30% by mass or less. When the amount is within the range indicated above, the advantageous effect tends to be better achieved.

Any SBR may be used including, for example, emulsion-polymerized styrene-butadiene rubbers (E-SBR) and solution-polymerized styrene-butadiene rubbers (S-SBR). Examples of commercial products include those available from Sumitomo Chemical Co., Ltd., JSR Corporation, Asahi Kasei Corporation, Zeon Corporation, etc.

The styrene content of the SBR is preferably 10% by mass or higher, more preferably 23.5% by mass or higher, still more preferably 25% by mass or higher, further preferably 30% by mass or higher, particularly preferably 35% by mass or higher, most preferably 36% by mass or higher. The styrene content is preferably 70% by mass or lower, more preferably 60% by mass or lower, still more preferably 50% by mass or lower. When the styrene content is within the range indicated above, the advantageous effect tends to be better achieved.

Herein, the styrene content of the SBR can be determined by $^{1}$H-NMR analysis.

It is believed that the use of SBR having a high styrene content (for example, SBR having a styrene content of 25% by mass or higher) may inhibit the compound of formula (I) from escaping from the tread, resulting in significantly improved wet grip performance.

The vinyl content of the SBR is preferably 10% by mass or higher, more preferably 20% by mass or higher, still more preferably 23% by mass or higher, particularly preferably 30% by mass or higher. The vinyl content is preferably 90% by mass or lower, more preferably 80% by mass or lower, still more preferably 70% by mass or lower. When the vinyl content is within the range indicated above, the advantageous effect tends to be better achieved.

Herein, the vinyl content (1,2-butadiene unit content) of the SBR can be measured by infrared absorption spectrometry.

When the rubber composition contains SBR, the amount of SBR based on 100% by mass of the rubber component content is preferably 20% by mass or more, more preferably 45% by mass or more, still more preferably 70% by mass or more, particularly preferably 80% by mass or more, and may be 100% by mass, while it is preferably 95% by mass or less, more preferably 90% by mass or less, still more preferably 85% by mass or less. When the amount is within the range indicated above, the advantageous effect tends to be better achieved.

When the rubber composition contains SBR and/or BR, the combined amount of SBR and BR based on 100% by mass of the rubber component content is preferably 50% by mass or more, more preferably 65% by mass or more, still more preferably 70% by mass or more, particularly preferably 90% by mass or more, and may be 100% by mass. When the combined amount is within the range indicated above, the advantageous effect tends to be better achieved.

When the rubber composition contains a large amount of SBR and/or BR (for example, when the combined amount of SBR and BR is 70% by mass or more), it is believed that as the rubber composition contains a large amount of

styrene and/or vinyl units which can be easily entangled with hydrocarbon groups, the compound of formula (I) may be inhibited from escaping from the tread, resulting in significantly improved wet grip performance.

The rubber components may include oil extended rubbers prepared by oil extension or resin extended rubbers prepared by resin extension. These may be used alone or in combinations of two or more. Oil extended rubbers are preferred among these.

Here, the oils used in the oil extended rubbers and the resins used in the resin extended rubbers may be as described later for the plasticizers. Moreover, the oil content of the oil extended rubbers and the resin content of the resin extended rubbers are not limited but are each usually about 10 to 50 parts by mass per 100 parts by mass of the rubber solids content.

The rubber components may be modified to introduce therein a functional group interactive with filler such as silica.

Examples of the functional group include a silicon-containing group ($-SiR_3$ where each R is the same or different and represents a hydrogen atom, a hydroxy group, a hydrocarbon group, an alkoxy group, or the like), an amino group, an amide group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxy group, an oxy group, and an epoxy group, each of which may be substituted. A silicon-containing group is preferred among these. More preferred is $-SiR_3$ where each R is the same or different and represents a hydrogen atom, a hydroxy group, a hydrocarbon group (preferably a C1-C6 hydrocarbon group, more preferably a C1-C6 alkyl group), or an alkoxy group (preferably a C1-C6 alkoxy group), and at least one R is a hydroxy group.

Specific examples of the compound (modifier) used to introduce the functional group include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane.

The rubber composition contains silica as a filler.

Examples of the silica include dry silica (anhydrous silicic acid) and wet silica (hydrous silicic acid). Wet silica is preferred because it has a large number of silanol groups. The raw material of the silica may be water glass (sodium silicate) or a biomass material such as rice husks. Usable commercial products are available from Evonik Degussa, Tosoh Silica Corporation, Solvay Japan, Tokuyama Corporation, etc. These may be used alone or in combinations of two or more.

The nitrogen adsorption specific surface area ($N_2SA$) of the silica is preferably 120 $m^2/g$ or more, more preferably 150 $m^2/g$ or more, still more preferably 160 $m^2/g$ or more. The $N_2SA$ is preferably less than 200 $m^2/g$, more preferably 195 $m^2/g$ or less, still more preferably 185 $m^2/g$ or less. Moreover, the lower or upper limit of the $N_2SA$ of the silica may be 175 $m^2/g$.

Herein, the $N_2SA$ of the silica is measured by a BET method in accordance with ASTM D3037-81.

The amount of silica per 100 parts by mass of the rubber component content in the rubber composition is preferably 30 parts by mass or more, more preferably 55 parts by mass or more, still more preferably 60 parts by mass or more, particularly preferably 65 parts by mass or more, most preferably 90 parts by mass or more, but is preferably 150 parts by mass or less, more preferably 120 parts by mass or less, still more preferably 100 parts by mass or less. When the amount is within the range indicated above, the advantageous effect tends to be better achieved.

When the amount of silica is increased (for example, 60% by mass or more), it is believed that the amount of the hydrophilic portion of the silica in the rubber is increased, which may increase adhesion to the road surface, resulting in significantly improved wet grip performance.

Examples of usable fillers other than silica include inorganic fillers other than silica and carbon black. Examples of inorganic fillers other than silica include clay, alumina, talc, calcium carbonate, magnesium carbonate, aluminum hydroxide, magnesium hydroxide, magnesium oxide, and titanium oxide. These may be used alone or in combinations of two or more. Carbon black is preferred among these.

Any carbon black may be used, and examples include N134, N110, N220, N234, N219, N339, N330, N326, N351, N550, and N762. The raw material of the carbon black may be a biomass material such as lignin or a plant oil. Moreover, the carbon black may be produced either by burning such as the furnace process or by hydrothermal carbonization (HTC). Usable commercial products are available from Asahi Carbon Co., Ltd., Cabot Japan K.K., Tokai Carbon Co., Ltd., Mitsubishi Chemical Corporation, Lion Corporation, NIPPON STEEL Carbon Co., Ltd., Columbia Carbon, etc. These may be used alone or in combinations of two or more.

The nitrogen adsorption specific surface area ($N_2SA$) of the carbon black is preferably 100 $m^2/g$ or more, more preferably 120 $m^2/g$ or more, still more preferably 140 $m^2/g$ or more, particularly preferably 142 $m^2/g$ or more. The $N_2SA$ is also preferably 200 $m^2/g$ or less, more preferably 180 $m^2/g$ or less, still more preferably 160 $m^2/g$ or less. When the $N_2SA$ is within the range indicated above, the advantageous effect tends to be better achieved.

Here, the nitrogen adsorption specific surface area of the carbon black can be determined in accordance with JIS

K 6217-2:2001.

The amount of carbon black per 100 parts by mass of the rubber component content in the rubber composition is preferably 1 part by mass or more, more preferably 5 parts by mass or more, still more preferably 10 parts by mass or more, particularly preferably 15 parts by mass or more, but is preferably 50 parts by mass or less, more preferably 40 parts by mass or less, still more preferably 30 parts by mass or less. When the amount is within the range indicated above, the advantageous effect tends to be better achieved.

When the amount of carbon black is increased (for example, 10 parts by mass or more), it is believed that the added compound of formula (I), which is well compatible with hydrocarbon groups, may be inhibited from escaping, resulting in significantly improved wet grip performance.

The amount of fillers (the total amount of fillers such as silica and carbon black) per 100 parts by mass of the rubber component content in the rubber composition is preferably 30 parts by mass or more, more preferably 60 parts by mass or more, still more preferably 70 parts by mass or more, further preferably 80 parts by mass or more, particularly preferably 90 parts by mass or more, most preferably 95 parts by mass or more, but is preferably 150 parts by mass or less, more preferably 130 parts by mass or less, still more preferably 115 parts by mass or less, particularly preferably 105 parts by mass or less. When the amount is within the range indicated above, the advantageous effect tends to be better achieved.

The rubber composition contains a compound represented by the formula (I) below. Here, the compound of formula (I) may be a single compound or a combination of two or more compounds.

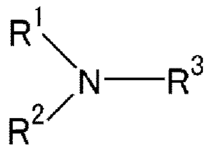 (I)

In formula (I), $R^1$ represents a hydrocarbon group; and $R^2$ and $R^3$ are the same or different and each represent a hydrogen atom (-H), a hydrocarbon group, or a $-(AO)_n-H$ group where n represents an integer of 1 or larger, n for $R^2$ and n for $R^3$ may be the same or different, and each AO is the same or different and represents an oxyalkylene group having two or more carbon atoms, and at least one of $R^2$ or $R^3$ is a $-(AO)_n-H$ group.

The hydrocarbon groups for $R^1$ to $R^3$ may be linear, branched, or cyclic, and examples include aliphatic hydrocarbon groups, alicyclic hydrocarbon groups, and aromatic hydrocarbon groups. Aliphatic hydrocarbon groups are preferred among these. The number of carbon atoms of the hydrocarbon groups is preferably 1 or more, more preferably 5 or more, still more preferably 8 or more, particularly preferably 12 or more, but is preferably 30 or less, more preferably 25 or less, still more preferably 22 or less, particularly preferably 20 or less. When the number of carbon atoms is within the range indicated above, the advantageous effect tends to be more suitably achieved.

Examples of aliphatic hydrocarbon groups include alkyl groups, alkylene groups, alkenyl groups, alkenylene groups, alkynyl groups, and alkynylene groups. Alkyl groups having the above-mentioned number of carbon atoms are preferred among these. Examples of alkyl groups include methyl, ethyl, n-propyl, isopropyl, n-butyl, isobutyl, sec-butyl, tert-butyl, pentyl, hexyl, heptyl, 2-ethylhexyl, octyl, nonyl, decyl, undecyl, dodecyl, tridecyl, tetradecyl, pentadecyl, and octadecyl groups.

Preferred examples of alicyclic hydrocarbon groups include C3-C8 alicyclic hydrocarbon groups. Specific examples include cyclopropyl, cyclobutyl, cyclopentyl, cyclohexyl, cycloheptyl, cyclooctyl, cyclopropenyl, cyclobutenyl, cyclopentenyl, cyclohexenyl, cycloheptenyl, and cyclooctenyl groups.

Preferred examples of aromatic hydrocarbon groups include C6-C10 aromatic hydrocarbon groups. Specific examples include phenyl, benzyl, phenethyl, tolyl, xylyl, and naphthyl groups. Here, the tolyl or xylyl group may have a methyl substituent(s) at any of the ortho, meta, and para positions of the benzene ring.

Each AO in the $-(AO)_n-H$ group (where n represents an integer of 1 or larger and n for $R^2$ and n for $R^3$ may be the same or different) for $R^2$ and $R^3$ is the same or different and represents an oxyalkylene group having two or more carbon atoms. The number of carbon atoms is preferably 3 or more, and the upper limit thereof is not limited, but is preferably 7 or less, more preferably 6 or less, still more preferably 5 or less. When the number of carbon atoms is within the range indicated above, the advantageous effect tends to be more suitably achieved.

The alkylene group A in the oxyalkylene group AO may be either linear or branched.

To more suitably achieve the advantageous effect, AO is preferably a group in which a branched chain $R^4$ (where $R^4$ represents a hydrocarbon group) is bound to a C2-C3 oxyalkylene group (an oxyethylene group (EO), an oxypropylene group (PO)). The $-(AO)_n-H$ group is more preferably a group represented by the formula (A) or (B) below, still more preferably a group of formula (A). Moreover, the branched chain $R^4$ is preferably bound to the carbon atom adjacent to an oxygen atom.

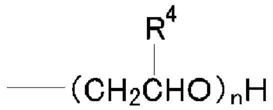

(A)

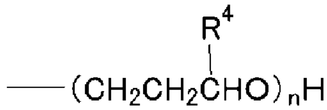

(B)

In formulas (A) and (B), $R^4$ represents a hydrocarbon group, and n is as defined for the $-(AO)_n-H$ group.

Examples of the hydrocarbon group as $R^4$ include those as described for the hydrocarbon groups for $R^1$ to $R^3$. Aliphatic hydrocarbon groups are preferred among these, with alkyl groups being more preferred. The number of carbon atoms of the hydrocarbon group, preferably aliphatic hydrocarbon group, more preferably alkyl group, is preferably 1 or more, more preferably 2 or more, but is preferably 6 or less, more preferably 5 or less, still more preferably 4 or less, particularly preferably 3 or less. When the number of carbon atoms is within the range indicated above, the advantageous effect tends to be more suitably achieved.

When $(AO)_n$ includes two or more types of oxyalkylene groups, the oxyalkylene groups may be arranged blockwise or randomly.

The symbol n represents the number of moles of AO added and is preferably 1 or larger, more preferably 2 or larger, but is preferably 20 or smaller, more preferably 16 or smaller, still more preferably 10 or smaller, particularly preferably 5 or smaller, most preferably 3 or smaller. When the number is within the range indicated above, the advantageous effect tends to be more suitably achieved.

In formula (I), at least one of $R^2$ or $R^3$ is a $-(AO)_n-H$ group. More preferably, both $R^2$ and $R^3$ are $-(AO)_n-H$ groups. In other words, the compound of formula (I) is still more preferably a compound represented by the following formula (I-1). In this case, the advantageous effect tends to be more suitably achieved.

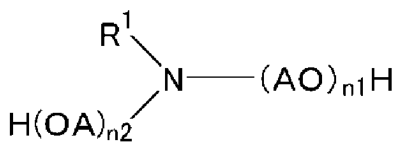

(I-1)

In formula (I-1), the symbols are as defined in formula (I), except that n1 and n2 each represent an integer of 1 or larger (an integer as defined for n).

In formulas (I) and (I-1), the total number of moles of AO added (n1 + n2) is preferably 2 or larger, more preferably 3 or larger, still more preferably 4 or lager, but is preferably 40 or smaller, more preferably 32 or smaller, still more preferably 20 or smaller, particularly preferably 10 or smaller, most preferably 6 or smaller. When the total number is within the range indicated above, the advantageous effect tends to be more suitably achieved.

Specific examples of the compound of formula (I) include LIPONOL series (compounds of formula (I) where $R^2$ represents $-(CH_2CH_2)_x-H$ and $R^3$ represents $-(CH_2CH_2)_y-H$) available from LION SPECIALTY CHEMICALS CO., LTD. These may be used alone or in combinations of two or more.

Specific examples of the compound of formula (I-1) include POE(2) octylamine, POE(4) decylamine, POE(2) dodecylamine, POE(5) dodecylamine, POE(15) dodecylamine, POE(2) tetradecylamine, POE(2) hexadecylamine, POE(2) octadecylamine, POE(20) octadecylamine, and POE(2) octadecenylamine. Here, the expression "POE(m)" means that m moles on average of oxyethylene units have been added. Examples of such commercial products include AMIET 102 (POE(2) dodecylamine), AMIET 105 (POE(5) dodecylamine), AMIET 302 (POE(2) octadecylamine), and AMIET 320 (POE(20) octadecylamine) all available from Kao Corporation.

The compound of formula (I) used may be any of these and other commercial products. Alternatively, it may be produced separately from the commercial products. A non-limiting exemplary production method includes reacting an alkylene oxide with a polyamine compound in the presence or absence of a catalyst.

The amount of the compound of formula (I) (the total amount of two or more compounds, if used in combination) per 100 parts by mass of the rubber component content in the rubber composition is preferably 0.1 parts by mass or more, more preferably 0.5 parts by mass or more, still more preferably 1.0 parts by mass or more, further preferably 2.0 parts by mass or more, further preferably 3.0 parts by mass or more, particularly preferably 4.0 parts by mass or more, most preferably 5.0 parts by mass or more. The amount per 100 parts by mass of the rubber component content is also preferably 10.0 parts by mass or less, more preferably 8.0 parts by mass or less, still more preferably 6.0 parts by mass or less. When the amount of the compound is within the range indicated above, the advantageous effect can be more suitably achieved.

The rubber composition desirably contains a silane coupling agent to better achieve the advantageous effect.

Non-limiting examples of the silane coupling agent include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane and 2-mercaptoethyltriethoxysilane; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Usable commercial products are available from, for example, Evonik Degussa, Momentive, Shin-Etsu Silicone, Tokyo Chemical Industry Co., Ltd., AZmax. Co., Dow Corning Toray Co., Ltd., etc. These may be used alone or in combinations of two or more. Among these, sulfide silane coupling agents, mercapto silane coupling agents, and amino silane coupling agents are preferred to obtain good handling stability and good fuel economy.

The amount of silane coupling agents per 100 parts by mass of the silica content in the rubber composition is preferably 3 parts by mass or more, more preferably 6 parts by mass or more, still more preferably 8 parts by mass or more, further preferably 10 parts by mass or more, but is preferably 16 parts by mass or less, more preferably 14 parts by mass or less, still more preferably 12 parts by mass or less. When the amount is within the range indicated above, the advantageous effect tends to be better achieved.

The rubber composition desirably contains one or more resins as plasticizers to better achieve the advantageous effect.

The resins may be known resins, but are desirably at least one selected from the group consisting of C5 resins, C5/C9 resins, C9 resins, coumarone-indene resins, styrene resins, terpene resins, cyclopentadiene resins, and hydrogenated products of these resins.

The term "C5 resins" refers to polymers containing a C5 fraction as a structural monomer. Examples include polymers obtained by polymerizing a C5 fraction, which is produced by thermal cracking of naphtha in the petrochemical industry, in the presence of a Friedel-Crafts catalyst such as $AlCl_3$ or $BF_3$. The term "C5 fraction" usually includes olefinic hydrocarbons such as 1-pentene, 2-pentene, 2-methyl-1-butene, 2-methyl-2-butene, and 3-methyl-1-butene; diolefinic hydrocarbons such as 2-methyl-1,3-butadiene, 1,2-pentadiene, 1,3-pentadiene, and 3-methyl-1,2-butadiene; and other components.

The term "C5/C9 resins" refers to polymers containing a C5 fraction and a C9 fraction as structural monomers. Examples include polymers obtained by polymerizing C5 and C9 fractions derived from petroleum in the presence of a Friedel-Crafts catalyst such as $AlCl_3$ or $BF_3$. Specific examples include copolymers mainly containing styrene, vinyltoluene, α-methylstyrene, indene, etc.

Herein, C5/C9 resins are regarded as resins different from styrene resins, C5 resins, and C9 resins.

The term "C9 resins" refers to polymers containing a C9 fraction as a structural monomer. Examples include polymers obtained by polymerizing a C9 fraction, which is produced as a byproduct together with petrochemical basic raw materials such as ethylene and propylene by thermal cracking of naphtha in the petrochemical industry, in the presence of a Friedel-Crafts catalyst such as $AlCl_3$ or $BF_3$. Specific examples of the C9 fraction include vinyltoluene, α-methylstyrene, β-methylstyrene, γ-methylstyrene, o-methylstyrene, p-methylstyrene, and indene. The C9 resins may be obtained by using a C9 fraction with other raw materials, including a C8 fraction such as styrene, a C10 fraction such as methylindene or 1,3-dimethylstyrene, and naphthalene, vinylnaphthalene, vinylanthracene, or p-tert-butylstyrene, and directly copolymerizing such a mixture of raw materials including C8 to C10 fractions, e.g., using a Friedel-Crafts catalyst.

Herein, C9 resins are regarded as resins different from styrene resins.

The term "coumarone-indene resins" refers to polymers containing coumarone and indene as structural monomers. Examples include copolymers of coumarone and indene and copolymers of coumarone, indene, and other monomers copolymerizable therewith.

The term "styrene resins" refers to polymers containing a styrenic monomer as a structural monomer. Examples include homopolymers polymerized from single styrenic monomers alone, copolymers copolymerized from two or more styrenic monomers, and copolymers of styrenic monomers and other monomers copolymerizable therewith.

Examples of styrenic monomers include styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, and p-chlorostyrene. Each of these styrenic monomers may be used alone, or two or more of these may be used in combination. Styrene or α-methylstyrene is preferred among these.

To better achieve the advantageous effect, α-methylstyrene resins (e.g., α-methylstyrene homopolymers,

copolymers of styrene and α-methylstyrene) are preferred among the styrene resins, with styrene/α-methylstyrene resins (copolymers of styrene and α-methylstyrene) being more preferred.

The term "terpene resins" refers to polymers containing a terpene compound (terpene monomer) as a structural monomer. Examples include homopolymers polymerized from single terpene compounds alone, copolymers copolymerized from two or more terpene compounds, and copolymers of terpene compounds and other monomers copolymerizable therewith.

The term "terpene compounds" refers to hydrocarbons having a composition represented by $(C_5H_8)_n$ or oxygen-containing derivatives thereof, which have a terpene backbone and are classified into monoterpenes ($C_{10}H_{16}$), sesquiterpenes ($C_{15}H_{24}$), diterpenes ($C_{20}H_{32}$), etc. Examples of the terpene compounds include α-pinene, β-pinene, dipentene, limonene, myrcene, alloocimene, ocimene, α-phellandrene, α-terpinene, γ-terpinene, terpinolene, 1,8-cineole, 1,4-cineole, α-terpineol, β-terpineol, and γ-terpineol. Each of these terpene compounds may be used alone, or two or more of these may be used in combination.

To better achieve the advantageous effect, homopolymers of terpene compounds (polyterpene resins) or copolymers of terpene compounds and styrenic monomers are preferred among the terpene resins, with copolymers of terpene compounds and styrenic monomers being more preferred. Moreover, the copolymers of terpene compounds and styrenic monomers are preferably copolymers of terpene compounds and styrene (terpene-styrene resins).

Herein, polymers containing a terpene compound and a styrenic monomer as structural monomers, such as terpene-styrene resins, are regarded as terpene resins rather than styrene resins.

The term "cyclopentadiene resins" refers to polymers containing a cyclopentadiene monomer as a structural monomer. Examples include homopolymers polymerized from single cyclopentadiene monomers alone, copolymers copolymerized from two or more cyclopentadiene monomers, and copolymers of cyclopentadiene monomers and other monomers copolymerizable therewith.

Examples of cyclopentadiene monomers include cyclopentadiene, dicyclopentadiene, and tricyclopentadiene. Each of these cyclopentadiene monomers may be used alone, or two or more of these may be used in combination. Dicyclopentadiene is preferred among these. In other words, the cyclopentadiene resins are preferably polymers containing dicyclopentadiene (DCPD) as a structural monomer (DCPD resins), more preferably hydrogenated DCPD resins.

To better achieve the advantageous effect, the resins preferably include a styrene resin and/or a terpene resin.

It is believed that the use of a resin, in particular a styrene resin and/or a terpene resin, may raise the Tg of the rubber compound to increase the tan δ (energy loss), thereby improving wet grip performance.

The amount (total amount) of resins per 100 parts by mass of the rubber component content in the rubber composition is preferably 5 parts by mass or more, more preferably 8 parts by mass or more, still more preferably 10 parts by mass or more, but is preferably 30 parts by mass or less, more preferably 25 parts by mass or less, still more preferably 20 parts by mass or less. When the amount is within the range indicated above, the advantageous effect tends to be better achieved.

The amount of styrene resins per 100 parts by mass of the rubber component content in the rubber composition is preferably 5 parts by mass or more, more preferably 8 parts by mass or more, still more preferably 10 parts by mass or more, but is preferably 30 parts by mass or less, more preferably 25 parts by mass or less, still more preferably 20 parts by mass or less. When the amount is within the range indicated above, the advantageous effect tends to be better achieved.

The amount of terpene resins per 100 parts by mass of the rubber component content in the rubber composition is preferably 5 parts by mass or more, more preferably 8 parts by mass or more, still more preferably 10 parts by mass or more, but is preferably 30 parts by mass or less, more preferably 25 parts by mass or less, still more preferably 20 parts by mass or less. When the amount is within the range indicated above, the advantageous effect tends to be better achieved.

The resins may be solid resins which are solid at room temperature (25°C) or liquid resins which are liquid at room temperature (25°C). To better achieve the advantageous effect, the resins preferably include at least a solid resin.

The softening point of the resins is preferably 50°C or higher, more preferably 80°C or higher, still more preferably 85°C or higher, further preferably 90°C or higher, but is preferably 180°C or lower, more preferably 130°C or lower, still more preferably 125°C or lower.

Herein, the softening point of resins is determined as set forth in JIS K 6220-1:2001 using a ring and ball softening point measuring apparatus and defined as the temperature at which the ball drops down.

The amount of solid resins per 100 parts by mass of the rubber component content in the rubber composition is preferably 5 parts by mass or more, more preferably 8 parts by mass or more, still more preferably 10 parts by mass or more, but is preferably 30 parts by mass or less, more preferably 25 parts by mass or less, still more preferably 20 parts by mass or less. When the amount is within the range indicated above, the advantageous effect tends to be better achieved.

The amount of liquid resins per 100 parts by mass of the rubber component content in the rubber composition is preferably 10 parts by mass or less, more preferably 5 parts by mass or less, still more preferably 1 part by mass or less, and may be 0 parts by mass. When the amount is within the range indicated above, the advantageous effect tends to be better achieved.

Usable commercial products of the resins are available from, for example, Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., etc.

Examples of usable plasticizers other than resins include liquid polymers and oils (including the oils contained in oil extended rubbers). Each of these plasticizers may be used alone, or two or more of these may be used in combination. Oils are preferred among these.

Examples of oils include process oils, plant oils, and mixtures thereof. Examples of process oils include paraffinic process oils, aromatic process oils, and naphthenic process oils. Examples of plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. In addition to these oils, oils after being used as lubricating oils in mixers for mixing rubber, engines, or other applications, or oils obtained by purifying waste cooking oils used in cooking establishments may also be appropriately used from the standpoint of life cycle assessment. Usable commercial products are available from Idemitsu Kosan Co., Ltd., Sankyo Yuka Kogyo K.K., ENEOS Corporation, Olisoy, H&R, Hokoku Corporation, Showa Shell Sekiyu K.K., Fuji Kosan Co., Ltd., etc. Each of these oils may be used alone, or two or more of these may be used in combination.

The amount of oils per 100 parts by mass of the rubber component content in the rubber composition is preferably 30 parts by mass or more, more preferably 35 parts by mass or more, still more preferably 37.5 parts by mass or more, further preferably 40 parts by mass or more, particularly preferably 45 parts by mass or more. The upper limit is preferably 80 parts by mass or less, more preferably 70 parts by mass or less, still more preferably 60 parts by mass or less. When the amount is within the range indicated above, the advantageous effect tends to be better achieved.

The amount of plasticizers (the total amount of plasticizers such as resins and oils) per 100 parts by mass of the rubber component content in the rubber composition is preferably 40 parts by mass or more, more preferably 45 parts by mass or more, still more preferably 47.5 parts by mass or more, further preferably 50 parts by mass or more, particularly preferably 55 parts by mass or more, but is preferably 100 parts by mass or less, more preferably 90 parts by mass or less, still more preferably 80 parts by mass or less, particularly preferably 70 parts by mass or less. When the amount is within the range indicated above, the advantageous effect tends to be better achieved.

The rubber composition may contain an antioxidant.

Examples of the antioxidant include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as polymerized 2,2,4-trimethyl-1,2-dihydroquinoline; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. Usable commercial products are available from Seiko Chemical Co., Ltd., Sumitomo Chemical Co., Ltd., Ouchi Shinko Chemical Industrial Co., Ltd., Flexsys, etc. Each of these antioxidants may be used alone, or two or more of these may be used in combination.

The amount of antioxidants per 100 parts by mass of the rubber component content in the rubber composition is preferably 0.5 parts by mass or more, more preferably 0.8 parts by mass or more, still more preferably 1.0 parts by mass or more, but is preferably 10.0 parts by mass or less, more preferably 6.0 parts by mass or less, still more preferably 4.0 parts by mass or less, particularly preferably 3.5 parts by mass or less. When the amount is within the range indicated above, the advantageous effect tends to be better achieved.

The rubber composition may contain a wax.

Non-limiting examples of the wax include petroleum waxes such as paraffin waxes and microcrystalline waxes; naturally-occurring waxes such as plant waxes and animal waxes; and synthetic waxes such as polymers of ethylene, propylene, or other similar monomers. Usable commercial products are available from Ouchi Shinko Chemical Industrial Co., Ltd., Nippon Seiro Co., Ltd., Seiko Chemical Co., Ltd., etc. Each of these waxes may be used alone, or two or more of these may be used in combination.

The amount of waxes per 100 parts by mass of the rubber component content in the rubber composition is preferably 1 part by mass or more, more preferably 2 parts by mass or more, but is preferably 10 parts by mass or less, more preferably 6 parts by mass or less. When the amount is within the range indicated above, the advantageous effect tends to be better achieved.

The rubber composition may contain stearic acid.

Conventional stearic acid may be used. Usable commercial products are available from NOF Corporation, Kao Corporation, FUJIFILM Wako Pure Chemical Corporation, Chiba Fatty Acid Co., Ltd., etc. Each of these may be used alone, or two or more of these may be used in combination.

The amount of stearic acid per 100 parts by mass of the rubber component content in the rubber composition is preferably 0.5 parts by mass or more, more preferably 1.0 parts by mass or more, still more preferably 1.5 parts by mass or

more, but is preferably 10.0 parts by mass or less, more preferably 6.0 parts by mass or less. When the amount is within the range indicated above, the advantageous effect tends to be better achieved.

The rubber composition may contain zinc oxide.

Conventional zinc oxide may be used. Usable commercial products are available from Mitsui Mining & Smelting Co., Ltd., Toho Zinc Co., Ltd., HakusuiTech Co., Ltd., Seido Chemical Industry Co., Ltd., Sakai Chemical Industry Co., Ltd., etc. Each of these may be used alone, or two or more of these may be used in combination.

The amount of zinc oxide per 100 parts by mass of the rubber component content in the rubber composition is preferably 0.5 parts by mass or more, more preferably 1.0 parts by mass or more, still more preferably 1.5 parts by mass or more, but is preferably 10.0 parts by mass or less, more preferably 6.0 parts by mass or less. When the amount is within the range indicated above, the advantageous effect tends to be better achieved.

The rubber composition may contain sulfur.

Examples of the sulfur include those commonly used as crosslinking agents in the rubber industry, such as powdered sulfur, precipitated sulfur, colloidal sulfur, insoluble sulfur, highly dispersible sulfur, and soluble sulfur. Usable commercial products are available from Tsurumi Chemical Industry Co., Ltd., Karuizawa Sulfur Co., Ltd., Shikoku Chemicals Corporation, Flexsys, Nippon Kanryu Industry Co., Ltd., Hosoi Chemical Industry Co., Ltd., etc. Each of these may be used alone, or two or more of these may be used in combination.

The amount of sulfur per 100 parts by mass of the rubber component content in the rubber composition is preferably 0.5 parts by mass or more, more preferably 1.0 parts by mass or more, still more preferably 1.5 parts by mass or more, but is preferably 3.5 parts by mass or less, more preferably 2.8 parts by mass or less, still more preferably 2.5 parts by mass or less. When the amount is within the range indicated above, the advantageous effect tends to be better achieved.

The rubber composition may contain a vulcanization accelerator.

Examples of the vulcanization accelerator include thiazole vulcanization accelerators such as 2-mercaptobenzothiazole and di-2-benzothiazolyl disulfide; thiuram vulcanization accelerators such as tetramethylthiuram disulfide (TMTD) and tetrakis(2-ethylhexyl)thiuram disulfide (TOT-N); sulfenamide vulcanization accelerators such as N-cyclohexyl-2-benzothiazylsulfenamide (CBS), N-tert-butyl-2-benzothiazolylsulfenamide (TBBS), N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. Usable commercial products are available from Sumitomo Chemical Co., Ltd., Ouchi Shinko Chemical Industrial Co., Ltd., etc. Each of these vulcanization accelerators may be used alone, or two or more of these may be used in combination.

The amount of vulcanization accelerators per 100 parts by mass of the rubber component content in the rubber composition is preferably 1 part by mass or more, more preferably 3 parts by mass or more, still more preferably 4 parts by mass or more, but is preferably 10 parts by mass or less, more preferably 8 parts by mass or less, still more preferably 7 parts by mass or less. When the amount is within the range indicated above, the advantageous effect tends to be better achieved.

In addition to the above-mentioned components, the rubber composition may contain additives commonly used in the tire industry, such as organic peroxides. The amounts of these additives are each preferably 0.1 to 200 parts by mass per 100 parts by mass of the rubber component content.

The rubber composition may be prepared, for example, by kneading the components using a rubber kneading machine such as an open roll mill or a Banbury mixer, and then vulcanizing the kneaded mixture.

The kneading conditions are as follows. In a base kneading step of kneading additives other than vulcanizing agents and vulcanization accelerators, the kneading temperature is usually 100 to 180°C, preferably 120 to 170°C. In a final kneading step of kneading vulcanizing agents and vulcanization accelerators, the kneading temperature is usually 120°C or lower, preferably 80 to 110°C, more preferably 85 to 110°C. Moreover, the composition obtained after kneading vulcanizing agents and vulcanization accelerators is usually vulcanized by press vulcanization, for example. The vulcanization temperature is usually 140 to 190°C, preferably 150 to 185°C. The vulcanization time is usually 5 to 15 minutes.

To better achieve the advantageous effect, it is desirable that the rubber composition contains one or more resins and satisfies the following relationship:

$$\text{Resin content} \times \text{Silica content} \geq 500$$

wherein Resin content represents the amount (parts by mass) of resins per 100 parts by mass of the rubber component content, and Silica content represents the amount (parts by mass) of silica per 100 parts by mass of the rubber component content.

The lower limit of the value of "Resin content × Silica content" is preferably 550 or more, more preferably 650 or more, still more preferably 800 or more, particularly preferably 900 or more. The upper limit is preferably 1500 or less, more preferably 1300 or less, still more preferably 1200 or less, particularly preferably 1100 or less. When the value is within the range indicated above, the advantageous effect tends to be better achieved.

When the value of "Resin content × Silica content" is high (for example, above 650), it is believed that as the product of the amount of silica having a hydrophilic group and the amount of resins is above a given value, the wet grip performance-improving effect resulting from an increase in adhesion of silica to the road surface and the wet grip performance-improving effect resulting from the incorporation of resins may be more synergistically achieved, resulting in significantly improved wet grip performance.

To better achieve the advantageous effect, it is desirable that the rubber composition contains one or more resins and satisfies the following relationship:

$$\text{Resin content} \times \text{Compound (I) content} \geq 10.0$$

wherein Resin content represents the amount (parts by mass) of resins per 100 parts by mass of the rubber component content, and Compound (I) content represents the amount (parts by mass) of compounds of formula (I) per 100 parts by mass of the rubber component content.

The lower limit of the value of "Resin content × Compound (I) content" is preferably 15.0 or more, more preferably 15.5 or more, still more preferably 18.0 or more, further preferably 20.0 or more, further preferably 30.0 or more, particularly preferably 40.0 or more, most preferably 50.0 or more. The upper limit is preferably 100.0 or less, more preferably 80.0 or less, still more preferably 60.0 or less. When the value is within the range indicated above, the advantageous effect tends to be better achieved.

When the value of "Resin content × Compound (I) content" is high (for example, above 15.0), it is believed that as the product of the amount of the compounds having a hydrophilic portion and the amount of resins is above a given value and thus the contact area between the hydrophilic portion and the wet road surface may be increased, the wet grip performance-improving effect resulting from an increase in the amount of the hydrophilic portion and the wet grip performance-improving effect resulting from the incorporation of resins may be more synergistically achieved, resulting in significantly improved wet grip performance.

In the tire of the present invention, the rubber composition is used in a tread, in particular a part thereof which contacts the road surface during running (a cap tread).

To better achieve the advantageous effect, the tread in the tire of the present invention desirably satisfies the following relationship:

$$\text{Silica content} \times \text{Land ratio} > 3000$$

wherein Silica content represents the amount (parts by mass) of silica per 100 parts by mass of the rubber component content, and Land ratio represents the above-described land ratio (%).

The value of "Silica content × Land ratio" is preferably 3300 or more, more preferably more than 3500, still more preferably 3850 or more, further preferably 3900 or more, further preferably more than 4000, further preferably 4095 or more, further preferably 4400 or more, further preferably 4615 or more, further preferably more than 5000, further preferably 5200 or more, further preferably 5670 or more, particularly preferably more than 6000. The upper limit is not limited, but the value of "Silica content × Land ratio" is preferably 10000 or less, more preferably 8000 or less, still more preferably 7000 or less, particularly preferably 6300 or less. When the value is within the range indicated above, the advantageous effect tends to be better achieved.

When the value of "Silica content × Land ratio" is high (for example, above 4000), it is believed that as the product of the amount of silica having a hydrophilic group and the contact area with the road surface is above a given value, the increase in adhesion of silica to the road surface and the increase in land ratio may cause a more synergistic effect, resulting in significantly improved wet grip performance.

To better achieve the advantageous effect, the tread in the tire of the present invention desirably satisfies the following relationship:

$$\text{Compound (I) content} \times \text{Land ratio} > 100$$

wherein Compound (I) content represents the amount (parts by mass) of compounds of formula (I) per 100 parts by mass of the rubber component content, and Land ratio represents the above-described land ratio (%).

The value of "Compound (I) content × Land ratio" is preferably more than 110, more preferably 120 or more, still more preferably more than 120, further preferably 126 or more, further preferably more than 130, further preferably more than 135, further preferably 140 or more, particularly preferably 142 or more. The upper limit is not limited, but the value of "Compound (I) content × Land ratio" is preferably 500 or less, more preferably 400 or less, still more preferably 360 or less, further preferably 240 or less, further preferably 210 or less, further preferably 200 or less, further preferably 180 or less, further preferably 170 or less, particularly preferably 160 or less. When the value is within the range indicated above, the

advantageous effect tends to be better achieved.

When the value of "Compound (I) content × Land ratio" is high (for example, above 130), it is believed that as the product of the amount of the compounds having a hydrophilic portion and the contact area with the road surface is above a given value and thus the contact area between the hydrophilic portion and the wet road surface is increased, the increase in the amount of the hydrophilic portion and the increase in land ratio may cause a more synergistic effect, resulting in significantly improved wet grip performance.

The tire may include either a monolayer tread or a multilayer tread.

The multilayer tread may be a two-layer tread consisting of a cap tread (a rubber layer provided as the outermost surface of the tread) and a base tread (a rubber layer provided inwardly adjacent to the cap tread with respect to the tire radial direction) or any other multilayer tread including two or more layers.

When the tire includes a multilayer tread, each rubber layer included in the multilayer tread may contain the above-described compound in order to more suitably achieve the advantageous effect. In particular, in a two-layer tread consisting of a cap tread and a base tread, both the rubber layers of the cap and base treads desirably contain the above-described compound.

To more suitably achieve the advantageous effect, the two-layer tread desirably satisfies the following relationship:

Compound (I) content in cap tread > Compound (I) content in base tread

wherein Compound (I) content in cap tread represents the amount (parts by mass) of compounds of formula (I) per 100 parts by mass of the rubber component content in the cap tread, and Compound (I) content in base tread represents the amount (parts by mass) of compounds of formula (I) per 100 parts by mass of the rubber component content in the base tread.

In the two-layer tread, the amount of compounds of formula (I) (the total amount of two or more compounds, if used in combination) per 100 parts by mass of the rubber component content in the cap tread rubber composition forming the cap tread is preferably 0.1 parts by mass or more, more preferably 0.5 parts by mass or more, still more preferably 1.0 parts by mass or more, further preferably 2.0 parts by mass or more, further preferably 3.0 parts by mass or more, particularly preferably 4.0 parts by mass or more, most preferably 5.0 parts by mass or more. The amount per 100 parts by mass of the rubber component content is also preferably 10.0 parts by mass or less, more preferably 8.0 parts by mass or less, still more preferably 6.0 parts by mass or less. When the amount is within the range indicated above, the advantageous effect can be more suitably achieved.

In the two-layer tread, the amount of compounds of formula (I) (the total amount of two or more compounds, if used in combination) per 100 parts by mass of the rubber component content in the base tread rubber composition forming the base tread is preferably 0.01 parts by mass or more, more preferably 0.1 parts by mass or more, still more preferably 0.2 parts by mass or more. The amount per 100 parts by mass of the rubber component content is also preferably 10.0 parts by mass or less, more preferably 2.0 parts by mass or less, still more preferably 1.5 parts by mass or less, particularly preferably 1.0 parts by mass or less. When the amount is within the range indicated above, the advantageous effect can be more suitably achieved.

The tire of the present invention may be produced from the above-described rubber composition by usual methods.

Specifically, the rubber composition in an unvulcanized state may be extruded into the shape of a tread and formed together with other tire components on a tire building machine in a usual manner to build an unvulcanized tire. The unvulcanized tire may be heated and pressurized in a vulcanizer to produce a tire.

The tire (e.g., pneumatic tire) may be used as any of the following tires: tires for passenger cars; tires for trucks and buses; tires for two-wheeled vehicles; high performance tires; winter tires such as studless winter tires and cold weather tires; run-flat tires provided with side reinforcing layers; noise absorber-equipped tires which include a noise absorber such as sponge on the tire inner cavity; sealant-attached tires which include a sealant capable of sealing punctures either inside the tire or on the tire inner cavity; electronic component-equipped tires which include an electronic component such as a sensor or a radio tag either inside the tire or on the tire inner cavity, etc. The tire is suitable for passenger cars.

## EXAMPLES

The present invention will be specifically described with reference to, but not limited to, examples.

The following describes the chemicals used in the examples and comparative examples.

NR: TSR20

SBR 1: Tufdene 3830 (styrene content: 36% by mass, vinyl content: 23% by mass, oil content: 37.5 parts by mass per 100 parts by mass of rubber solids) available from Asahi Kasei Corporation
SBR 2: SBR1502 (styrene content: 23.5% by mass) available from JSR Corporation
BR: BR360L (cis 1,4 bond content: 98%) available from Ube Industries, Ltd.
Carbon black: Seast 9H ($N_2SA$: 142 $m^2/g$) available from Tokai Carbon Co., Ltd.
Silica: Ultrasil VN3 ($N_2SA$: 175 $m^2/g$) available from Evonik Degussa
Silane coupling agent: Si266 (bis(3-triethoxysilylpropyl)disulfide) available from Evonik Degussa
Compound 1: LIPONOL HT/14 (a compound of formula (I-1)) available from LION SPECIALTY CHEMICALS CO., LTD.
Compound 2: LIPONOL T/15 (a compound of formula (I-1)) available from LION SPECIALTY CHEMICALS CO., LTD.
Compound 3: LIPONOL C/15 (a compound of formula (I) (formula (I-1))) available from LION SPECIALTY CHEMICALS CO., LTD.
Compound 4: AMIET 102 (POE (2) dodecylamine, a compound of formula (I-1)) available from Kao Corporation
Resin 1: Sylvatraxx 4150 (β-pinene resin, β-pinene resin content: 98% by mass or higher, Mw: 2350, Mn: 830) available from Arizona Chemical
Resin 2: Sylvares SA85 (a-methylstyrene resin (copolymer of α-methylstyrene and styrene), softening point: 85°C) available from Arizona Chemical
Resin 3: YS Resin TO125 (aromatic modified terpene resin, softening point: 125°C) available from Yasuhara Chemical Co., Ltd.
Resin 4: NOVARES C90 (coumarone-indene resin, softening point: 90°C) available from Rutgers Chemicals
Oil: Diana Process NH-70S (aromatic process oil) available from Idemitsu Kosan Co., Ltd.
Zinc oxide: zinc oxide #1 available from Mitsui Mining & Smelting Co., Ltd.
Antioxidant 1: NOCRAC 6C available from Ouchi Shinko Chemical Industrial Co., Ltd.
Antioxidant 2: NOCRAC FR available from Ouchi Shinko Chemical Industrial Co., Ltd.
Stearic acid: stearic acid "TSUBAKI" available from NOF Corporation
Wax: Ozoace 0355 available from Nippon Seiro Co., Ltd.
Sulfur: powdered sulfur available from Tsurumi Chemical Industry Co., Ltd.
Vulcanization accelerator 1: Nocceler D (N,N'-diphenylguanidine, DPG) available from Ouchi Shinko Chemical Industrial Co., Ltd.
Vulcanization accelerator 2: Nocceler CZ (N-cyclohexyl-2-benzothiazolylsulfenamide) available from Ouchi Shinko Chemical Industrial Co., Ltd.

(Examples and Comparative Examples)

According to the formulation recipe shown in each table, the chemicals other than the sulfur and vulcanization accelerators were kneaded at 150°C for 5 minutes using a 1.7 L Banbury mixer (Kobe Steel, Ltd.) to give a kneaded mixture. Then, the sulfur and vulcanization accelerators were added to the kneaded mixture, and they were kneaded at 80°C for 5 minutes using an open roll mill to give an unvulcanized rubber composition.
The unvulcanized rubber composition was formed into the shape of a cap tread and assembled with other tire components to build an unvulcanized tire. The unvulcanized tire was press-vulcanized at 170°C for 10 minutes to obtain a test tire (passenger car tire, size: 205/70R15).
The test tires prepared as above were subjected to the evaluation below. The results are shown in the tables.
Moreover, the following evaluation standard was used to calculate indices in the evaluation.
Tables 1 and 2: Comparative Example 10

(Wet grip performance)

A set of the test tires were mounted on a front-engine, front-wheel drive car of 2000 cc displacement made in Japan, and the car was driven on a wet road. The stopping distance required for the car to stop after the brakes were applied at 100 km/h without ABS was measured. The stopping distances are expressed as an index using the equation below where the stopping distance of the standard comparative example is taken as 100. A higher index indicates better wet grip performance.

(Wet grip performance index) = (Stopping distance of standard comparative example)/(Stopping distance of each formulation example) $\times$ 100

[Table 1]

| | | Example | | | | | | | | | | | | | | | | | | | | | |
|---|---|---|---|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| Formulation (parts by mass) | NR | 35 | | | | | | 35 | 35 | 35 | 35 | 35 | 35 | 35 | | 35 | 35 | 35 | | | | | 35 | 35 |
| | SBR 1 (styrene content 36%) | | | 110 | 110 | 110 | 110 | | | | | | | | 137.5 | | | | 110 | 110 | 110 | 110 | | |
| | SBR 2 (styrene content 23.5%) | 45 | 80 | | | | | 45 | 45 | 45 | 45 | 45 | 45 | 45 | | 45 | 45 | 45 | | | | | 45 | 45 |
| | BR | 20 | 20 | 20 | 20 | 20 | 20 | 20 | 20 | 20 | 20 | 20 | 20 | 20 | | 20 | 20 | 20 | 20 | 20 | 20 | 20 | 20 | 20 |
| | Carbon black | 5 | 5 | 5 | 5 | 15 | 15 | 5 | 5 | 5 | 5 | 5 | 5 | 5 | 5 | 5 | 5 | 5 | 5 | 5 | 5 | 5 | 5 | 5 |
| | Silica | 55 | 55 | 55 | 65 | 65 | 90 | 55 | 55 | 55 | 55 | 55 | 55 | 55 | 55 | 55 | 55 | 55 | 65 | 65 | 65 | 90 | 55 | 55 |
| | Silane coupling agent | 4.4 | 4.4 | 4.4 | 5.2 | 5.2 | 7.2 | 4.4 | 4.4 | 4.4 | 4.4 | 4.4 | 4.4 | 4.4 | 4.4 | 4.4 | 4.4 | 4.4 | 5.2 | 5.2 | 5.2 | 7.2 | 4.4 | 4.4 |
| | Compound 1 | 2.0 | 2.0 | 2.0 | 2.0 | 2.0 | 2.0 | | | | 2.0 | 2.0 | 4.0 | 6.0 | 2.0 | 2.0 | 1.0 | 2.0 | 2.0 | 2.0 | 2.0 | 2.0 | 3.0 | 3.0 |
| | Compound 2 | | | | | | | 2.0 | | | | | | | | | | | | | | | | |
| | Compound 3 | | | | | | | | 2.0 | | | | | | | | | | | | | | | |
| | Compound 4 | | | | | | | | | 2.0 | | | | | | | | | | | | | | |
| | Resin 1 | 10 | 10 | 10 | 10 | 10 | 10 | 10 | 10 | 10 | | | 10 | 10 | 10 | | 10 | 10 | 10 | 10 | 10 | 10 | 10 | 10 |
| | Resin 2 | | | | | | | | | | 10 | | | | | | | | | | | | | |
| | Resin 3 | | | | | | | | | | | 10 | | | | | | | | | | | | |
| | Resin 4 | | | | | | | | | | | | | | | 10 | | | | | | | | |
| | Oil | 30 | 30 | | 5 | 10 | 15 | 30 | 30 | 30 | 30 | 30 | 30 | 30 | | 30 | 30 | 30 | 5 | 5 | 5 | 5 | 30 | 30 |
| | Zinc oxide | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Antioxidant 1 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| | Antioxidant 2 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | Stearic acid | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Wax | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |
| | Sulfur | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Vulcanization accelerator 1 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |
| | Vulcanization accelerator 2 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |
| Land ratio (%) | | 60 | 60 | 60 | 60 | 60 | 70 | 60 | 60 | 60 | 60 | 60 | 60 | 60 | 60 | 60 | 60 | 80 | 63 | 71 | 80 | 63 | 60 | 70 |
| Combined amount (% by mass) of SBR and BR based on 100% by mass of rubber component content | | 65 | 100 | 100 | 100 | 100 | 100 | 65 | 65 | 65 | 65 | 65 | 65 | 65 | 100 | 65 | 65 | 65 | 100 | 100 | 100 | 100 | 65 | 65 |
| Silica content × Land ratio | | 3300 | 3300 | 3300 | 3900 | 3900 | 6300 | 3300 | 3300 | 3300 | 3300 | 3300 | 3300 | 3300 | 3300 | 3300 | 3300 | 4400 | 4095 | 4615 | 5200 | 5670 | 3300 | 3850 |
| Compound (I) content × Land ratio | | 120 | 120 | 120 | 120 | 120 | 140 | 120 | 120 | 120 | 120 | 120 | 240 | 360 | 120 | 120 | 60 | 160 | 126 | 142 | 160 | 126 | 180 | 210 |
| Resin content × Silica content | | 550 | 550 | 550 | 650 | 650 | 900 | 550 | 550 | 550 | 550 | 550 | 550 | 550 | 550 | 550 | 550 | 550 | 650 | 650 | 650 | 900 | 550 | 550 |
| Resin content × Compound (I) content | | 20.0 | 20.0 | 20.0 | 20.0 | 20.0 | 20.0 | 20.0 | 20.0 | 20.0 | 20.0 | 20.0 | 40.0 | 60.0 | 20.0 | 20.0 | 10.0 | 20.0 | 20.0 | 20.0 | 20.0 | 20.0 | 30.0 | 30.0 |
| Evaluation | Wet grip performance | 118 | 123 | 127 | 136 | 145 | 164 | 127 | 114 | 109 | 114 | 123 | 127 | 132 | 125 | 109 | 110 | 139 | 142 | 152 | 162 | 161 | 118 | 128 |

[Table 2]

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|
| Formulation (parts by mass) | NR | 35 | 35 | 35 | | | | | | | |
| | SBR 1 (styrene content 36%) | | | | | | | 110 | 110 | 110 | 110 |
| | SBR 2 (styrene content 23.5%) | 45 | 45 | 45 | 80 | 80 | 80 | | | | |
| | BR | 20 | 20 | 20 | 20 | 20 | 20 | 20 | 20 | 20 | 20 |
| | Carbon black | 60 | 5 | 5 | 60 | 5 | 5 | 60 | 5 | 5 | 5 |
| | Silica | | 55 | 55 | | 55 | 55 | | 55 | 55 | 65 |
| | Silane coupling agent | | 4.4 | 4.4 | | 4.4 | 4.4 | | 4.4 | 4.4 | 5.2 |
| | Compound 1 | 2.0 | | 2.0 | 2.0 | | 2.0 | 2.0 | | 2.0 | |
| | Compound 2 | | | | | | | | | | |
| | Compound 3 | | | | | | | | | | |
| | Compound 4 | | | | | | | | | | |
| | Resin 1 | 10 | 10 | 10 | 10 | 10 | 10 | 10 | 10 | 10 | 10 |
| | Resin 2 | | | | | | | | | | |
| | Resin 3 | | | | | | | | | | |
| | Oil | 30 | 30 | 30 | 30 | 30 | 30 | | | | 5 |
| | Zinc oxide | 1.5 | 1.5 | 1.5 | 1.5 | 1.5 | 1.5 | 1.5 | 1.5 | 1.5 | 1.5 |
| | Antioxidant 1 | 2.5 | 2.5 | 2.5 | 2.5 | 2.5 | 2.5 | 2.5 | 2.5 | 2.5 | 2.5 |
| | Antioxidant 2 | 1.0 | 1.0 | 1.0 | 1.0 | 1.0 | 1.0 | 1.0 | 1.0 | 1.0 | 1.0 |
| | Stearic acid | 1.5 | 1.5 | 1.5 | 1.5 | 1.5 | 1.5 | 1.5 | 1.5 | 1.5 | 1.5 |
| | Wax | 2.0 | 2.0 | 2.0 | 2.0 | 2.0 | 2.0 | 2.0 | 2.0 | 2.0 | 2.0 |
| | Sulfur | 1.5 | 1.5 | 1.5 | 1.5 | 1.5 | 1.5 | 1.5 | 1.5 | 1.5 | 1.5 |
| | Vulcanization accelerator 1 | 2.0 | 2.0 | 2.0 | 2.0 | 2.0 | 2.0 | 2.0 | 2.0 | 2.0 | 2.0 |
| | Vulcanization accelerator 2 | 2.0 | 2.0 | 2.0 | 2.0 | 2.0 | 2.0 | 2.0 | 2.0 | 2.0 | 2.0 |
| Land ratio (%) | | 60 | 60 | 50 | 60 | 60 | 50 | 60 | 60 | 50 | 60 |
| Combined amount (% by mass) of SBR and BR based on 100% by mass of rubber component content | | 65 | 65 | 65 | 100 | 100 | 100 | 100 | 100 | 100 | 100 |
| Silica content × Land ratio | | 0 | 3300 | 2750 | 0 | 3300 | 2750 | 0 | 3300 | 2750 | 3900 |
| Compound (I) content × Land ratio | | 120 | 0 | 100 | 120 | 0 | 100 | 120 | 0 | 100 | 0 |
| Resin content × Silica content | | 0 | 550 | 550 | 0 | 550 | 550 | 0 | 550 | 550 | 650 |
| Resin content × Compound (I) content | | 20.0 | 0.0 | 20.0 | 20.0 | 0.0 | 20.0 | 20.0 | 0.0 | 20.0 | 0.0 |
| Evaluation | Wet grip performance | 64 | 82 | 91 | 77 | 86 | 95 | 82 | 95 | 100 | 100 |

As shown in the tables, the examples exhibited better wet grip performance than the comparative examples.

## Claims

1. A tire, comprising a tread, the tread comprising:

   at least one rubber component;
   at least one silica; and
   at least one compound represented by the following formula (I):

   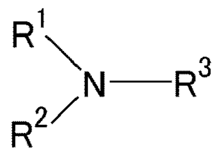

   (I)

   wherein $R^1$ represents a hydrocarbon group; and $R^2$ and $R^3$ are the same or different and each represent a hydrogen atom, a hydrocarbon group, or a $-(AO)_n-H$ group where n represents an integer of 1 or larger, n for $R^2$ and n for $R^3$ may be the same or different, and each AO is the same or different and represents an oxyalkylene group having two or more carbon atoms, and at least one of $R^2$ or $R^3$ is a $-(AO)_n-H$ group,
   the tread having a land ratio of 60% or higher, when the land ratio is calculated as defined in the specification.

2. The tire according to claim 1, wherein a combined amount of styrene-butadiene rubbers and polybutadiene rubbers based on 100% by mass of a rubber component content in the tread is 70% by mass or more.

3. The tire according to claim 1 or 2, wherein the tread comprises at least one styrene-butadiene rubber having a styrene content of 25% by mass or higher.

4. The tire according to any one of claims 1 to 3, wherein the tread comprises the silica in an amount of 60 parts by mass or more per 100 parts by mass of a rubber component content in the tread.

5. The tire according to any one of claims 1 to 4, wherein the tread comprises at least one carbon black in an amount of 10 parts by mass or more per 100 parts by mass of a rubber component content in the tread.

6. The tire according to any one of claims 1 to 5, wherein the tread satisfies the following relationship:

   $$\text{Silica content} \times \text{Land ratio} > 4000$$

   wherein Silica content represents an amount (parts by mass) of the silica per 100 parts by mass of a rubber component content in the tread, and Land ratio represents the land ratio (%).

7. The tire according to any one of claims 1 to 6, wherein the tread comprises at least one polybutadiene rubber.

8. The tire according to any one of claims 1 to 7, wherein the tread comprises at least one selected from the group consisting of styrene resins and terpene resins.

9. The tire according to any one of claims 1 to 8, wherein the tread comprises at least one resin and satisfies the following relationship:

   $$\text{Resin content} \times \text{Silica content} \geq 650$$

   wherein Resin content and Silica content represent amounts (parts by mass) of the resin and the silica, respectively, per 100 parts by mass of a rubber component content in the tread.

**10.** The tire according to any one of claims 1 to 9,
wherein the tread comprises at least one resin and satisfies the following relationship:

$$\text{Resin content} \times \text{Compound (I) content} \geq 15.0$$

wherein Resin content and Compound (I) content represent amounts (parts by mass) of the resin and the compound of formula (I), respectively, per 100 parts by mass of a rubber component content in the tread.

**11.** The tire according to any one of claims 1 to 10,
wherein the tread satisfies the following relationship:

$$\text{Compound (I) content} \times \text{Land ratio} > 130$$

wherein Compound (I) content represents an amount (parts by mass) of the compound of formula (I) per 100 parts by mass of a rubber component content in the tread, and Land ratio represents the land ratio (%).

## Patentansprüche

**1.** Reifen, umfassend einen Laufstreifen,
wobei der Laufstreifen umfasst:

mindestens eine Kautschukkomponente;
mindestens ein Siliziumdioxid; und
mindestens eine durch die folgende Formel (I) dargestellte Verbindung:

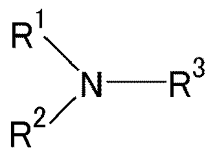

(I)

wobei $R^1$ eine Kohlenwasserstoffgruppe darstellt, und $R^2$ und $R^3$ gleich oder verschieden sind und jeweils ein Wasserstoffatom, eine Kohlenwasserstoffgruppe oder eine $-(AO)_n-H$-Gruppe darstellen, worin n eine ganze Zahl von 1 oder größer darstellt, n für $R^2$ und n für $R^3$ gleich oder verschieden sein kann, und jedes AO gleich oder verschieden ist und eine Oxyalkylen-Gruppe darstellt, die zwei oder mehr Kohlenstoffatome aufweist, und mindestens eines von $R^2$ oder $R^3$ eine $-(AO)_n-H$-Gruppe ist,
wobei der Laufstreifen einen Positivprofilanteil von 60% oder höher aufweist, wenn der Positivprofilanteil berechnet ist wie in der Beschreibung definiert.

**2.** Reifen nach Anspruch 1,
wobei eine Gesamtmenge an Styrol-Butadien-Kautschuken und Polybutadien-Kautschuken, bezogen auf 100 Massen-% eines Kautschuckomponentengehalts in dem Laufstreifen, 70 Massen-% oder mehr beträgt.

**3.** Reifen nach Anspruch 1 oder 2,
wobei der Laufstreifen mindestens einen Styrol-Butadien-Kautschuk umfasst, der einen Styrolgehalt von 25 Massen-% oder höher aufweist.

**4.** Reifen nach einem der Ansprüche 1 bis 3,
wobei der Laufstreifen das Siliziumdioxid in einer Menge von 60 Massenteilen oder mehr pro 100 Massenteile eines Kautschuckomponentengehalts in dem Laufstreifen umfasst.

**5.** Reifen nach einem der Ansprüche 1 bis 4,
wobei der Laufstreifen mindestens einen Ruß in einer Menge von 10 Massenteilen oder mehr pro 100 Massenteile eines Kautschuckomponentengehalts in dem Laufstreifen umfasst.

**6.** Reifen nach einem der Ansprüche 1 bis 5,

wobei der Laufstreifen dem folgenden Verhältnis genügt:

$$\text{Siliziumdioxidgehalt} \times \text{Positivprofilanteil} > 4000$$

wobei Siliziumdioxidgehalt eine Menge (Massenteile) des Siliziumdioxids pro 100 Massenteile eines Kautschukkomponentengehalts in dem Laufstreifen darstellt, und Positivprofilanteil den Positivprofilanteil (%) darstellt.

**7.** Reifen nach einem der Ansprüche 1 bis 6,
wobei der Laufstreifen mindestens einen Polybutadien-Kautschuk umfasst.

**8.** Reifen nach einem der Ansprüche 1 bis 7,
wobei der Laufstreifen mindestens eines umfasst, welches ausgewählt ist aus der Gruppe bestehend aus Styrolharzen und Terpenharzen.

**9.** Reifen nach einem der Ansprüche 1 bis 8,
wobei der Laufstreifen mindestens ein Harz umfasst und dem folgenden Verhältnis genügt:

$$\text{Harzgehalt} \times \text{Siliziumdioxidgehalt} \geq 650$$

wobei Harzgehalt und Siliziumdioxidgehalt Mengen (Massenteile) des Harzes beziehungsweise des Siliziumdioxids pro 100 Massenteile eines Kautschukkomponentengehalts in dem Laufstreifen darstellen.

**10.** Reifen nach einem der Ansprüche 1 bis 9,
wobei der Laufstreifen mindestens ein Harz umfasst und dem folgenden Verhältnis genügt:

$$\text{Harzgehalt} \times \text{Verbindung-(I)-Gehalt} \geq 15{,}0$$

wobei Harzgehalt und Verbindung-(I)-Gehalt Mengen (Massenteile) des Harzes beziehungsweise der Verbindung der Formel (I) pro 100 Massenteile eines Kautschukkomponentengehalts in dem Laufstreifen darstellen.

**11.** Reifen nach einem der Ansprüche 1 bis 10,
wobei der Laufstreifen dem folgenden Verhältnis genügt:

$$\text{Verbindung-(I)-Gehalt} \times \text{Positivprofilanteil} > 130$$

wobei Verbindung-(I)-Gehalt eine Menge (Massenteile) der Verbindung der Formel (I) pro 100 Massenteile eines Kautschukkomponentengehalts in dem Laufstreifen darstellt, und Positivprofilanteil den Positivprofilanteil (%) darstellt.

## Revendications

**1.** Pneumatique, comprenant une bande de roulement,
la bande de roulement comprenant :

au moins un composant de caoutchouc ;
au moins une silice ; et
au moins un composé représenté par la formule suivante (I) :

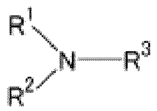 (I)

où $R^1$ représente un groupement hydrocarbure ; et $R^2$ et $R^3$ sont identiques ou différents et chacun

représente un atome d'hydrogène, un groupement hydrocarbure, ou un groupement $-(AO)_n-H$ où n représente un nombre entier égal ou supérieur à 1, les n pour $R^2$ et n pour $R^3$ peuvent être identiques ou différents, et chaque AO est identique ou différent et représente un groupement oxy alcylène ayant deux ou plus de deux atomes de carbone, et au moins un parmi $R^2$ ou $R^3$ est un groupement $-(AO)_n-H$,
la bande de roulement ayant un rapport d'aspect égal ou supérieur à 60 %,
lorsque le rapport d'aspect est calculé comme défini dans la spécification.

**2.** Pneumatique selon la revendication 1,
dans lequel une quantité combinée de caoutchoucs styrène-butadiène et de caoutchoucs polybutadiène, sur la base de 100 % en masse d'une teneur en composant de caoutchouc dans la bande de roulement, est égale ou supérieure à 70 % en masse.

**3.** Pneumatique selon la revendication 1 ou la revendication 2,
dans lequel la bande de roulement comprend au moins un caoutchouc styrène-butadiène ayant une teneur en styrène égale ou supérieure à 25 % en masse.

**4.** Pneumatique selon l'une quelconque des revendications 1 à 3,
dans lequel la bande de roulement comprend la silice dans une quantité égale ou supérieure à 60 parties en masse pour 100 parties en masse d'une teneur en composant de caoutchouc dans la bande de roulement.

**5.** Pneumatique selon l'une quelconque des revendications 1 à 4,
dans lequel la bande de roulement comprend au moins un noir de carbone dans une quantité égale ou supérieure à 10 parties en masse pour 100 parties en masse d'une teneur en composant de caoutchouc dans la bande de roulement.

**6.** Pneumatique selon l'une quelconque des revendications 1 à 5,
dans lequel la bande de roulement satisfait à la relation suivante :

$$\text{Teneur en silice} \times \text{rapport d'aspect} > 4000$$

où la teneur en silice représente une quantité (parties en masse) de silice pour 100 parties en masse d'une teneur en composant de caoutchouc dans la bande de roulement et le rapport d'aspect représente le rapport d'aspect (%).

**7.** Pneumatique selon l'une quelconque des revendications 1 à 6,
dans lequel la bande de roulement comprend au moins un caoutchouc polybutadiène.

**8.** Pneumatique selon l'une quelconque des revendications 1 à 7,
dans lequel la bande de roulement comprend au moins une résine choisie dans le groupe constitué de résines styréniques et de résines terpéniques.

**9.** Pneumatique selon l'une quelconque des revendications 1 à 8,
dans lequel la bande de roulement comprend au moins une résine et satisfait à la relation suivante :

$$\text{Teneur en résine} \times \text{teneur en silice} \geq 650$$

où la teneur en résine et la teneur en silice représentent les quantités (parties en masse) de résine et de silice, respectivement, pour 100 parties en masse d'une teneur en composant de caoutchouc dans la bande de roulement.

**10.** Pneumatique selon l'une quelconque des revendications 1 à 9,
dans lequel la bande de roulement comprend au moins une résine et satisfait à la relation suivante :

$$\text{Teneur en résine} \times \text{teneur en composé (I)} \geq 15{,}0$$

où la teneur en résine et la teneur en composé (I) représentent les quantités (parties en masse) de résine et de composé selon la formule (I), respectivement, pour 100 parties en masse d'une teneur en composant de caoutchouc dans la bande de roulement.

**11.** Pneumatique selon l'une quelconque des revendications 1 à 10, dans lequel la bande de roulement satisfait à la relation suivante :

$$\text{Teneur en composé (I)} \times \text{rapport d'aspect} > 130$$

où la teneur en composé (I) représente une quantité (parties en masse) de composé selon la formule (I) pour 100 parties en masse d'une teneur en composant de caoutchouc dans la bande de roulement et le rapport d'aspect représente le rapport d'aspect (%).